# FASCICULE DE BREVET EUROPEEN

(11) **EP 1 249 813 B1**
(45) Date de publication et mention de la délivrance du brevet: **17.03.2004**
(21) Numéro de dépôt: 02290300.9
(22) Date de dépôt: 07.02.2002
(51) Int. Cl.: G08G 5/00, B64C 13/00

(54) **Dispositif de commande d'un système de surveillance de l'environnement d'un aéronef**
Vorrichtung zur Kontrolle des umgebenden Überwachungssystems eines Flugzeuges
Device for monitoring the surround surveillance system of a plane

(30) Priorité: 26.02.2001 FR 0102568
(43) Date de publication de la demande: 16.10.2002
(73) Titulaire: AIRBUS FRANCE, 31060 Toulouse (FR)
(72) Inventeur: Morizet, Benoit, 31400 Toulouse (FR); Vial, Jean-Sébastien, 31770 Colomiers (FR)
(74) Mandataire: Hauer, Bernard

(56) Documents cités:
- WO-A-01/01207
- US-A- 4 019 702
- US-A- 4 373 184
- US-A- 4 394 999
- US-A- 4 852 031
- US-A- 5 265 827

## Description

La présente invention concerne un dispositif de commande d'un système de surveillance de l'environnement d'un aéronef, notamment d'un avion de transport.

Dans le cadre de la présente invention, ledit système de surveillance peut concerner notamment au moins l'un des systèmes connus suivants :
- un système du type TCAS ("Traffic Collision Avoidance System") pour surveiller le trafic aérien dans l'environnement de l'aéronef, afin d'empêcher des collisions ;
- un système du type WXR ("Weather Radar") pour surveiller la météo ; ou
- un système du type TAWS ("Terrain Awareness and Warning System") pour surveiller le terrain environnant.

On sait que chacun de ces systèmes de surveillance connus met en oeuvre des fonctions commandables, qui sont relatives à la surveillance correspondante de l'environnement, c'est-à-dire qui concernent directement ou indirectement cette surveillance. De plus, chacun de ces systèmes de surveillance comporte un dispositif de commande comprenant une pluralité d'éléments de commande qui sont susceptibles d'être actionnés par un opérateur, en particulier un pilote de l'aéronef, pour commander toutes les fonctions commandables dudit système de surveillance.

Généralement, un tel dispositif de commande comporte un système de commande matériel particulier comprenant un panneau muni d'une pluralité d'éléments de commande matériels, tels que des boutons-poussoirs et des inverseurs à levier notamment.

Un tel dispositif de commande présente quelques inconvénients. En particulier, lorsqu'un élément de commande du type précité est défaillant, il n'est plus possible de commander la fonction qui lui est associée, ce qui est bien entendu très gênant et peut de plus poser des problèmes de sécurité, notamment lorsque cette fonction concerne directement une fonction importante, telle qu'une fonction anticollision par exemple.

En outre, un tel dispositif de commande n'est guère évolutif, c'est-à-dire que l'on ne peut pas l'adapter facilement à la mise en oeuvre de la commande de nouvelles fonctions. En effet, lors de la mise en place de nouvelles fonctions sur le système de surveillance correspondant, il est notamment nécessaire de remplacer le panneau de commande existant par un nouveau panneau muni d'éléments de commande supplémentaires adaptés à ces nouvelles fonctions et de modifier en correspondance les branchements électriques, ce qui est bien entendu long et coûteux.

Le brevet US 4394999 décrit un dispositif de conduite redondant d'une aéronef comprenant deux systèmes de contrôle différents.

La présente invention concerne un dispositif de commande de fonctions commandables relatives à la surveillance de l'environnement d'un aéronef, notamment un avion de transport civil, qui permet de remédier aux inconvénients précités.

A cet effet, ledit dispositif de commande comportant un premier système de commande d'un premier type, comprenant une pluralité d'éléments de commande qui sont susceptibles d'être actionnés par un opérateur, pour commander toutes lesdites fonctions commandables, est caractérisé en ce qu'il comporte, de plus, au moins un second système de commande d'un second type différent dudit premier type, qui comprend une pluralité d'éléments de commande qui sont susceptibles d'être actionnés par un opérateur, pour commander au moins certaines desdites fonctions commandables, et en ce que lesdits premiers et seconds systèmes de commande sont en interaction de sorte qu'un actionnement d'au moins l'un des éléments de commande de l'un desdits systèmes de commande, pour commander l'une desdites fonctions afin de l'amener dans un état commandé, entraîne automatiquement une action, le cas échéant sur au moins un élément de commande de l'autre système de commande qui est également destiné à commander cette fonction, de manière à amener cet élément de commande dans un état de commande qui est représentatif dudit état commandé de ladite fonction.

Ainsi, grâce à l'invention, lors de la panne d'un élément de commande d'un desdits systèmes de commande, la fonction qui est associée à cet élément de commande en panne peut toujours être commandée par l'élément de commande approprié de l'autre système de commande. Par conséquent, le dispositif de commande conforme à l'invention est particulièrement fiable.

De plus, comme les deux systèmes de commande sont des systèmes de types différents, l'opérateur peut choisir celui qui lui convient le mieux, soit pendant tout le vol, soit de façon temporaire en fonction des phases et/ou des conditions de vol, ce qui apporte une grande souplesse d'utilisation et augmente le confort de l'opérateur dans l'exécution de ses tâches relatives à la surveillance de l'environnement.

En outre, grâce à l'interaction entre les deux systèmes de commande, c'est-à-dire à l'action réciproque entre deux éléments de commande (respectivement de chacun desdits deux systèmes de commande) associés à une même fonction, qui permet d'amener l'élément de commande non actionné dans un état de commande approprié, un opérateur peut passer indifféremment et sans difficulté, à tout instant, d'un système à l'autre, par exemple en fonction de l'urgence de la commande, de la phase de vol correspondante ou de la position de l'opérateur par rapport à ces deux systèmes de commande. De plus, comme chaque élément de commande est, grâce à l'invention, à tout instant dans une position représentative de l'état commandé de la fonction associée, l'opérateur est toujours informé de l'état effectif des commandes et les différentes commandes peuvent toujours être réalisées avec une grande précision.

Dans le cadre de la présente invention, les deux systèmes de commande considérés (ou même plus) peuvent être de différents types connus. Toutefois, de préférence, au moins l'un desdits systèmes de commande est :
- un système logiciel comprenant un écran muni d'objets sensibles correspondant auxdits éléments de commande, qui sont susceptibles d'être actionnés indirectement par l'intermédiaire d'un moyen approprié connu, tel qu'une souris ou une boule de commande par exemple. Un tel système logiciel est facilement évolutif, c'est-à-dire que de nouveaux éléments de commande peuvent être facilement rajoutés, par une simple adaptation de son logiciel, sans avoir à modifier l'architecture dudit système de commande. Il peut donc être adapté à très faible coût, rapidement et facilement, à de nouvelles fonctions du système de surveillance ; ou
- un système matériel comprenant des éléments de commande manuels, qui sont susceptibles d'être actionnés directement par un opérateur. Généralement, un tel système de commande est très robuste et son actionnement de type usuel est parfaitement maîtrisé par les pilotes.

Dans un mode de réalisation préféré, ledit premier système de commande est un système logiciel, ledit second système de commande est un système matériel, et ledit second système de commande est destiné à commander uniquement certaines desdites fonctions commandables, de préférence les fonctions qui sont considérées comme les plus importantes en ce qui concerne la surveillance de l'environnement qui est mise en oeuvre.

Le dispositif de commande conforme à ce mode de réalisation préféré de l'invention présente, simultanément, notamment les avantages suivants :
- il est fiable, grâce à la présence de deux systèmes de commande ;
- il permet à tout instant une commande avec une grande précision indifféremment par l'intermédiaire des deux systèmes de commande, grâce à l'interaction entre ces deux systèmes de commande ;
- il est facilement évolutif, grâce aux caractéristiques dudit système logiciel ; et
- il est robuste, grâce aux caractéristiques dudit système matériel.

Par ailleurs, de façon avantageuse, au moins l'un desdits éléments de commande manuels dudit système matériel est destiné à commander une fonction à deux états, qui est susceptible d'être activée et désactivée, et ledit système matériel comporte au moins un voyant lumineux qui est associé audit élément de commande et qui :
- est allumé automatiquement, lorsque ladite fonction est activée et
- est éteint automatiquement, lorsque ladite fonction est désactivée.

De plus, avantageusement, au moins l'un desdits éléments de commande manuels dudit système matériel est destiné à commander une fonction susceptible de prendre à chaque fois l'une d'une pluralité d'états commandés, et ledit élément de commande comporte un élément rotatif, par exemple un bouton rotatif, dont la position en rotation est représentative de l'état commandé de ladite fonction.

La présente invention concerne également un système de surveillance de l'environnement d'un aéronef, comportant une pluralité de fonctions commandables relatives à la surveillance de l'environnement et un dispositif de commande pour commander ces fonctions commandables.

Selon l'invention, ledit système de surveillance est remarquable en ce que ledit dispositif de commande est tel que celui précité.

De préférence, ledit système de surveillance comporte :
- trois ensembles de fonctions commandables, qui sont destinés à la surveillance respectivement du trafic aérien, de la météo et du terrain ; et
- un seul dispositif de commande pour commander ces trois ensembles de fonctions commandables.

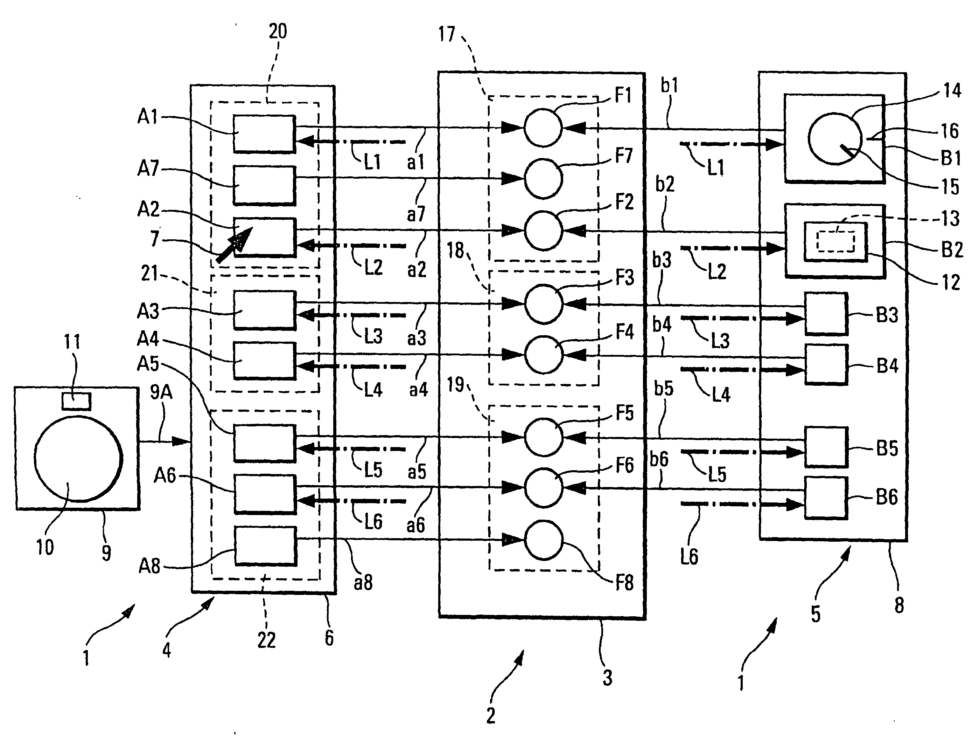

La figure du dessin annexé fera bien comprendre comment l'invention peut être réalisée. Cette unique figure est un schéma synoptique d'un système de surveillance de l'environnement d'un aéronef, comportant un dispositif de commande conforme à l'invention.

Le dispositif de commande 1 conforme à l'invention est destiné à la commande d'un système de surveillance 2 de l'environnement d'un aéronef, notamment d'un avion de transport civil. Ce système de surveillance 2, qui est représenté sur l'unique figure du dessin, est embarqué sur l'aéronef et est destiné à la surveillance d'au moins un paramètre relatif à l'environnement tel que le trafic aérien, la météo ou le terrain par exemple, par l'intermédiaire de moyens de surveillance 3 précisés ci-dessous.

De façon connue, lesdits moyens de surveillance 3 comportent des fonctions F1 à F8 commandables usuelles, qui sont relatives à la surveillance mise en oeuvre par ces moyens de surveillance 3. Il peut s'agir :
- de fonctions d'information destinées à présenter des informations relatives à la surveillance du terrain, de la météo, du trafic, ..., et présentées de préférence sous forme "visuelle" (par exemple positions des avions, ...) ; et/ou
- de fonctions d'alerte qui résultent de calculs, à partir par exemple des paramètres mesurés (alerte par rapport au terrain, ...).

De façon connue, ledit système de surveillance 2 comporte, en plus des moyens de surveillance 3, ledit dispositif de commande 1 qui comprend un système de commande 4, d'un premier type particulier, muni d'une pluralité d'éléments de commandes A1 à A8. Ces éléments de commande sont destinés à commander respectivement lesdites fonctions commandables F1 à F8 des moyens de surveillance 3, comme illustré par des liaisons a1 à a8.

Selon l'invention, ledit dispositif de commande 1 comporte de plus au moins un second système de commande 5 d'un second type, différent dudit premier type, qui comprend une pluralité d'éléments de commande B1 à B6 qui sont susceptibles d'être actionnés par un opérateur, pour commander au moins certaines F1 à F6 desdites fonctions commandables F1 à F8 des moyens de surveillance 3, comme illustré par des liaisons b1 à b6.

De plus, selon l'invention, lesdits premier et second systèmes de commande 4 et 5 sont en interaction, comme illustré par des liaisons L1 à L6 représentées partiellement qui relient ensemble deux à deux respectivement les éléments de commande A1 à A6 et B1 à B6 des deux systèmes de commande 4 et 5, de telle sorte qu'un actionnement d'au moins l'un des éléments de commande de l'un desdits systèmes de commande 4, 5, pour commander l'une desdites fonctions F1 à F8 afin de l'amener dans un état commandé (par exemple l'actionnement de l'élément de commande B2 du système 5 pour commander la fonction F2) entraîne automatiquement une action, le cas échéant sur au moins un élément de commande de l'autre système de commande qui est également destiné à commander cette fonction (dans l'exemple précité, l'élément de commande A2 du système 4) de manière à amener cet élément de commande (A2) dans un état de commande qui est représentatif dudit état commandé de ladite fonction (F2).

Ainsi, grâce à l'invention, lors de la panne d'un élément de commande d'un desdits systèmes de commande 4, 5 (par exemple la panne de l'élément de commande A5 du système 4), la fonction (F5) qui est associée à cet élément (A5) en panne peut toujours être commandée par l'élément de commande approprié de l'autre système de commande (l'élément de commande B5 du système 5 pour cet exemple).

Par conséquent, le dispositif de commande 1 conforme à l'invention est particulièrement fiable. Bien entendu, il est également envisageable que ledit dispositif de commande 1 comporte plus de deux systèmes de commande.

De plus, comme les systèmes de commande 4 et 5 sont des systèmes de types différents, l'opérateur peut choisir celui qui lui convient le mieux, soit pendant tout le vol, soit de façon temporaire en fonction des phases et/ou des conditions de vol, ce qui apporte une grande souplesse d'utilisation et augmente le confort de l'opérateur dans l'exécution de ses tâches relatives à la surveillance de l'environnement.

En outre, grâce à l'interaction entre les deux systèmes de commande 4 et 5, c'est-à-dire à l'action réciproque entre deux éléments de commande (respectivement de chacun desdits deux systèmes de commande 4 et 5) associés à une même fonction, qui permet d'amener l'élément de commande non actionné dans un état de commande approprié, un opérateur peut passer indifféremment et sans difficulté, à tout instant, d'un système à l'autre, par exemple en fonction de l'urgence de la commande, de la phase de vol correspondante ou de la position de l'opérateur par rapport à ces deux systèmes de commande 4 et 5.

De plus, comme chaque élément de commande du dispositif de commande est à tout instant dans une position représentative de l'état commandé de la fonction associée, les différentes commandes peuvent toujours être réalisées avec une grande précision.

Dans le cadre de la présente invention, les deux systèmes de commande considérés (ou même plus) peuvent être de différents types connus. Toutefois, de préférence, le système de commande 4 est un système logiciel et comprend de façon usuelle :
- au moins un écran 6, de préférence du type LCD à cristaux liquides ("Liquid Crystal Display"), sur lequel sont accessibles les éléments A1 à A8 qui sont des objets sensibles (points, zones, valeurs alphanumériques, ...) qui peuvent être désignés, notamment par un curseur 7, et activés pour commander la mise en oeuvre des fonctions F1 à F8 correspondantes ; et
- au moins un dispositif d'actionnement 9 qui est relié par une liaison 9A à l'écran 6 et qui comporte au moins un moyen 10, par exemple une souris informatique ou une boule de commande, permettant à un opérateur de désigner l'un des éléments A1 à A8, de préférence en déplaçant le curseur 7, et au moins un moyen 11, par exemple un bouton-poussoir, pour valider (c'est-à-dire pour activer) un élément A1 à A8 qui est désigné par le curseur 7.

Ce système de commande 4 de type logiciel est facilement évolutif, c'est-à-dire que de nouveaux éléments de commande peuvent être facilement rajoutés, par une simple adaptation de son logiciel, sans avoir à modifier son architecture matérielle (dispositif d'actionnement 9, écran 6). Ce système de commande 4 peut donc être adapté à très faible coût, rapidement et facilement, à de nouvelles fonctions du système de surveillance 2.

Par ailleurs, le système de commande 5 est un système matériel comprenant un panneau de commande 8 muni d'éléments de commande manuels B1 à 86, qui sont susceptibles d'être actionnés directement par un opérateur. Généralement, un tel système de commande 5 est très robuste et son actionnement de type usuel est parfaitement maîtrisé par les pilotes.

De plus, selon l'invention, ce système de commande 5 est destiné à commander uniquement certaines des fonctions commandables F1 à F8 du système de surveillance 2, à savoir les fonctions F1 à F6 dans l'exemple représenté sur la figure. De préférence, la commande est limitée aux fonctions (F1 à F6) qui sont considérées comme les plus importantes (en particulier celles qui sont nécessaires pour faire fonctionner le système de surveillance 2) en ce qui concerne la surveillance de l'environnement qui est mise en oeuvre par ledit système de surveillance 2. Ceci permet de réduire l'encombrement dudit système de commande 5 et autorise l'ajout de nouvelles fonctions au système de surveillance 2 sans avoir à modifier ledit système de commande 5, ces nouvelles fonctions n'étant simplement pas commandables par l'intermédiaire du système matériel 5, mais uniquement par l'intermédiaire du système logiciel 4.

La commande d'une fonction F1 à F8 peut être de deux types différents, à savoir :
- soit à deux états, correspondant respectivement à un état actif et un état inactif de la fonction correspondante commandée ;
- soit à pluralité d'états, la fonction correspondante commandée pouvant prendre, de façon continue ou par paliers, une pluralité d'états commandés différents, par exemple des intensités différentes pour la réception d'un signal sonore ou visuel.

Dans le premier cas, les éléments de commande manuels du système 5 sont de préférence des boutons 12, comme représenté pour l'élément B2, qui sont munis d'un voyant lumineux 13 de préférence intégré. Selon que la fonction F2 correspondante est active ou inactive, le voyant lumineux 13 est (automatiquement) allumé ou éteint.

En revanche, dans le second cas, les éléments de commande manuels du système 5 sont de préférence des boutons rotatifs 14, comme représenté pour l'élément B1, qui sont munis d'un repère 15 qui coopère avec un repère fixe 16. Selon l'invention, l'écart angulaire entre ces deux repères 15 et 16 varie en fonction de l'intensité ou de l'amplitude de la commande de la fonction F1 correspondante.

Bien entendu, le système de commande 4 est également muni de moyens connus, pour mettre en évidence les deux types de commande précités. Par exemple, on peut prévoir :
- pour une commande à deux états, l'absence ou la présence d'un signe particulier ou d'une surbrillance sur l'écran 6 ; et
- pour une commande à pluralité d'états, un signal à surface variable, tel qu'un barographe par exemple, sur ledit écran 6.

Dans un mode de réalisation préféré de l'invention, les moyens de surveillance 3 englobent plusieurs ensembles de surveillance 17, 18 et 19, chacun desdits ensembles 17, 18 et 19 étant destiné à surveiller un "paramètre" ou objet particulier. A titre d'illustration :
- l'ensemble de surveillance 17 peut être du type TCAS précité, qui est destiné à la surveillance du trafic aérien ;
- l'ensemble de surveillance 18 peut être du type WXR précité, qui est destiné à la surveillance de la météo ; et
- l'ensemble de surveillance 19 peut être du type TAWS précité, qui est destiné à la surveillance du terrain.

Dans ce mode de réalisation préféré, on a regroupé toutes les commandes de ces différents ensembles de surveillance 17, 18 et 19 sur un seul et même dispositif de commande 1, ce qui facilite le contrôle et la commande de ces ensembles 17, 18 et 19 et réduit l'encombrement.

Dans ce cas, les éléments de commande A1 à A8 du système 4 peuvent être regroupés sur différentes pages 20, 21 et 22 qui sont destinées à la commande respectivement desdits ensembles 17, 18 et 19. Ces pages 20 à 22 peuvent être appelées, de façon usuelle, par l'intermédiaire d'un menu.

Une autre répartition des objets des différentes pages 20 à 22 est bien entendu également possible dans le cadre de la présente invention.

## Revendications

1. Dispositif de commande de fonctions commandables relatives à la surveillance de l'environnement d'un aéronef, en particulier d'un avion de transport, ledit dispositif de commande (1) comportant un premier système de commande (4) d'un premier type, comprenant une pluralité d'éléments de commande (A1 à A8) qui sont susceptibles d'être actionnés par un opérateur, pour commander toutes lesdites fonctions commandables (F1 à F8),
**caractérisé en ce qu'**il comporte, de plus, au moins un second système de commande (5) d'un second type différent dudit premier type, qui comprend une pluralité d'éléments de commande (B1 à B6) qui sont susceptibles d'être actionnés par un opérateur, pour commander au moins certaines (F1 à F6) desdites fonctions commandables (F1 à F8), et **en ce que** lesdits premiers et seconds systèmes de commande (4, 5) sont en interaction de sorte qu'un actionnement d'au moins l'un des éléments de commande de l'un desdits systèmes de commande (4, 5), pour commander l'une desdites fonctions (F1 à F8) afin de l'amener dans un état commandé, entraîne automatiquement une action, le cas échéant sur au moins un élément de commande de l'autre système de commande (5, 4) qui est également destiné à commander cette fonction, de manière à amener cet élément de commande dans un état de commande qui est représentatif dudit état commandé de ladite fonction (F1 à F8).

2. Dispositif de commande selon la revendication 1,
**caractérisé en ce que** l'un desdits systèmes de commande est un système logiciel (4) comprenant un écran (6) muni d'objets sensibles (A1 à A8) correspondant auxdits éléments de commande, qui sont susceptibles d'être actionnés indirectement par l'intermédiaire d'un moyen approprié (9).

3. Dispositif de commande selon l'une des revendications 1 et 2,
**caractérisé en ce que** l'un desdits systèmes de commande est un système matériel (5) comprenant des éléments de commande manuels (B1 à B6), qui sont susceptibles d'être actionnés directement par un opérateur.

4. Dispositif de commande selon l'une quelconque des revendications 1 à 3,
**caractérisé en ce que** ledit premier système de commande est un système logiciel (4), **en ce que** ledit second système de commande est un système matériel (5), et **en ce que** ledit second système de commande (5) est destiné à commander uniquement certaines (F1 à F6) desdites fonctions commandables (F1 à F8).

5. Dispositif de commande selon l'une des revendications 3 et 4,
**caractérisé en ce qu'**au moins l'un desdits éléments de commande manuels (B2) dudit système matériel (5) est destiné à commander une fonction (F2) à deux états, qui est susceptible d'être activée et désactivée, et **en ce que** ledit système matériel (5) comporte au moins un voyant lumineux (13) qui est associé audit élément de commande (B2) et qui :
- est allumé automatiquement lorsque ladite fonction (F2) est activée ; et
- est éteint automatiquement lorsque ladite fonction (F2) est désactivée.

6. Dispositif de commande selon l'une des revendications 3 à 5,
**caractérisé en ce qu'**au moins l'un desdits éléments de commande manuels (B1 ) dudit système matériel (5) est destiné à commander une fonction (F1) susceptible de prendre à chaque fois l'une d'une pluralité d'états commandés, et **en ce que** ledit élément de commande (B1 ) comporte un élément rotatif (14), dont la position en rotation est représentative de l'état commandé de ladite fonction (F1).

7. Système de surveillance de l'environnement d'un aéronef, comportant une pluralité de fonctions commandables (F1 à F8) relatives à la surveillance de l'environnement et un dispositif de commande (1) pour commander lesdites fonctions commandables (F1 à F8),
**caractérisé en ce que** ledit dispositif de commande (1) est du type de celui spécifié sous l'une quelconque des revendications 1 à 6.

8. Système de surveillance selon la revendication 7,
**caractérisé en ce qu'**il comporte :
- trois ensembles (17, 18, 19) de fonctions commandables, qui sont destinés à la surveillance respectivement du trafic aérien, de la météo et du terrain ; et
- un seul dispositif de commande (1) pour commander lesdits trois ensembles (17, 18, 19) de fonctions commandables.

## Claims

1. Control device for controlling controllable functions relating to the monitoring of the environment of an aircraft, in particular of a transport aircraft, said control device (1) comprising a first control system (4) of a first type, comprising a plurality of control elements (A1 to A8) which are capable of being actuated by an operator, so as to control all said controllable functions (F1 to F8),
**characterized in that** it furthermore comprises at least one second control system (5) of a second type different from said first type, which comprises a plurality of control elements (B1 to B6) which are capable of being actuated by an operator, so as to control at least some (F1 to F6) of said controllable functions (F1 to F8), and **in that** said first and second control systems (4, 5) are in interaction so that an actuation of at least one of the control elements of one of said control systems (4, 5), so as to control one of said functions (F1 to F8) such as to bring it into a controlled state, automatically brings about an action, as the case may be on at least one control element of the other control system (5, 4) which is also intended to control this function, in such a way as to bring this control element into a control state which is representative of said controlled state of said function (F1 to F8).

2. Control device according to Claim 1,
**characterized in that** one of said control systems is a software system (4) comprising a screen (6) furnished with responsive objects (A1 to A8) corresponding to said control elements, which are capable of being actuated indirectly by way of an appropriate means (9).

3. Control device according to either of Claims 1 and 2,
**characterized in that** one of said control systems is a hardware system (5) comprising manual control elements (B1 to B6), which are capable of being actuated directly by an operator.

4. Control device according to any one of Claims 1 to 3,
**characterized in that** said first control system is a software system (4), **in that** said second control system is a hardware system (5), and **in that** said second control system (5) is intended to control only some (F1 to F6) of said controllable functions (F1 to F8).

5. Control device according to either of Claims 3 and 4, **characterized in that** at least one of said manual control elements (B2) of said hardware system (5) is intended to control a function (F2) with two states, which is capable of being activated and deactivated, and **in that** said hardware system (5) comprises at least one indicator light (13) which is associated with said control element (B2) and which:
- comes on automatically when said function (F2) is activated; and
- goes off automatically when said function (F2) is deactivated.

6. Control device according to one of Claims 3 to 5,
**characterized in that** at least one of said manual control elements (B1) of said hardware system (5) is intended to control a function (F1) capable of taking, on each occasion, one of a plurality of controlled states, and **in that** said control element (B1) comprises a rotary element (14), whose rotational position is representative of the controlled state of said function (F1).

7. System for monitoring the environment of an aircraft, comprising a plurality of controllable functions (F1 to F8) relating to the monitoring of the environment and a control device (1) for controlling said controllable functions (F1 to F8),
**characterized in that** said control device (1) is of the type of that specified under any one of Claims 1 to 6.

8. Monitoring system according to Claim 7,
**characterized in that** it comprises:
- three clusters (17, 18, 19) of controllable functions, which are intended for the monitoring respectively of air traffic, the weather and the terrain; and
- a single control device (1) for controlling said three clusters (17, 18, 19) of controllable functions.

## Patentansprüche

1. Vorrichtung zur Steuerung von steuerbaren Funktionen bezüglich der Überwachung der Umgebung eines Flugzeugs, insbesondere eines Verkehrsflugzeugs, wobei die Steuerungsvorrichtung (1) ein erstes Steuerungssystem (4) eines ersten Typs umfasst, das mehrere Steuerelemente (A1 bis A8) besitzt, die von einem Bediener zur Steuerung aller steuerbaren Funktionen (F1 bis F8) betätigt werden können,
**dadurch gekennzeichnet, dass** sie außerdem mindestens ein zweites Steuerungssystem (5) eines zweiten, sich vom ersten Typ unterscheidenden Typs umfasst, das mehrere Steuerelemente (B1 bis B6) besitzt, die von einem Bediener zur Steuerung von zumindest bestimmten Funktionen (F1 bis F6) der steuerbaren Funktionen (F1 bis F8) betätigt werden können, und dadurch, dass das erste und das zweite Steuerungssystem (4, 5) sich in Wechselwirkung befinden, sodass eine Betätigung von mindestens einem Steuerelement eines der genannten Steuerungssysteme (4, 5) zur Steuerung einer der Funktionen (F1 bis F8), um sie in einen gesteuerten Zustand zu versetzen, automatisch eine Betätigung gegebenenfalls zumindest eines Steuerelements des anderen Steuerungssystems (5, 4) bewirkt, das ebenfalls diese Funktion steuern soll, sodass dieses Steuerelement in einen Steuerungszustand versetzt wird, der repräsentativ für den gesteuerten Zustand der genannten Funktion (F1 bis F8) ist.

2. Steuerungsvorrichtung nach Anspruch 1,
**dadurch gekennzeichnet, dass** eines der genannten Steuerungssysteme ein Softwaresystem (4) ist, das ein Sichtanzeigegerät (6) mit den Steuerelementen entsprechenden Ansprechobjekten (A1 bis A8) umfasst, die indirekt über ein geeignetes Mittel betätigt werden können.

3. Steuerungsvorrichtung nach einem der Ansprüche 1 und 2,
**dadurch gekennzeichnet, dass** eines der Steuerungssysteme ein Hardwaresystem (5) ist, das manuelle Steuerelemente (B1 bis B6) umfasst, die direkt von einem Bediener betätigt werden können.

4. Steuerungsvorrichtung nach einem der Ansprüche 1 bis 3,
**dadurch gekennzeichnet, dass** das genannte erste Steuerungssystem ein Softwaresystem (4) ist, dadurch, dass das zweite Steuerungssystem ein Hardwaresystem (5) ist, und
dadurch, dass das zweite Steuerungssystem (5) nur bestimmte (F1 bis F6) der genannten steuerbaren Funktionen (F1 bis F8) steuern soll.

5. Steuerungsvorrichtung nach einem der Ansprüche 3 und 4,
**dadurch gekennzeichnet, dass** zumindest eines der manuellen Steuerelemente (B2) des Hardwaresystems (5) eine Funktion (F2) mit zwei Zuständen steuern soll, die aktiviert und deaktiviert werden kann, und dadurch, dass das Hardwaresystem (5) mindestens eine Anzeigeleuchte (13) umfasst, die dem Steuerelement (B2) zugeordnet ist und die
- automatisch aufleuchtet, wenn die genannte Funktion (F2) aktiviert wird; und
- automatisch erlischt, wenn die genannte Funktion (F2) deaktiviert wird.

6. Steuerungsvorrichtung nach einem der Ansprüche 3 bis 5,
**dadurch gekennzeichnet, dass** mindestens eines der genannten manuellen Steuerelemente (B1) des Hardwaresystems (5) eine Funktion (F1) steuern soll, die jedes Mal einen von mehreren gesteuerten Zuständen annehmen kann, und dadurch, dass das Steuerelement (B1) ein Drehelement (14) umfasst, dessen Drehstellung repräsentativ für den gesteuerten Zustand der Funktion (F1) ist.

7. System zur Überwachung der Umgebung eines Flugzeugs, das mehrere steuerbare Funktionen (F1 bis F8) bezüglich der Überwachung der Umgebung und eine Steuerungsvorrichtung (1) zur Steuerung der steuerbaren Funktionen (F1 bis F8) besitzt,
**dadurch gekennzeichnet, dass** die Steuerungsvorrichtung (1) von dem Typ ist, der in einem der Ansprüche 1 bis 6 spezifiziert wird.

8. Überwachungssystem nach Anspruch 7,
**dadurch gekennzeichnet, dass** es
- drei Einheiten (17, 18 und 19) steuerbarer Funktionen besitzt, die für die Überwachung des Luftverkehrs, des Wetters beziehungsweise des Geländes vorgesehen sind; und
- eine einzige Steuerungsvorrichtung (1) zur Steuerung der drei Einheiten (17, 18 und 19) steuerbarer Funktionen
umfasst.
